# EUROPEAN PATENT APPLICATION

(11) **EP 4 588 411 A2**
(43) Date of publication of application: **23.07.2025**
(21) Application number: 24222155.4
(22) Date of filing: 20.12.2024
(51) Int. Cl.: A47J 47/00

(54) **CUTTING BOARD WITH INTEGRATED KNIFE STORAGE**

(30) Priority: 29.12.2023 US 202363616213 P; 12.01.2024 US 202463620565 P
(71) Applicant: Fiskars Brands, Inc., Middleton, WI 53562 (US)
(72) Inventor: SHIMANOFF, Lael Abraham, Portland 97219 (US); HALLBROOK, Paul Ernest Hoover, Portland 97225 (US)
(74) Representative: Gill Jennings & Every LLP

(57) **Abstract**

A cutting board (100) includes a tray (120), a knife (165, 175), and a cutting board (180, 190) removable coupled to the tray. The knife is positioned within a knife slot (150) defined by the tray. The cutting board coupled to the tray applies a force to the knife such that the knife is retained in a deflected state between the tray and the cutting board. The knife acts as a spring to provide a counterforce pushing against the tray and the cutting board, thereby preventing the knife rattling as the cutting board is moved. The cutting board can include an inner cutting board (180) and an outer cutting board (190), and the tray can include a base tray (105) and a knife tray (120). The inner cutting board and the outer cutting board can interchangeably engage with at least one of the base tray of the knife tray to provide a plurality of alternative cutting board configurations.

## Description

### CROSS-REFENCE TO RELATED PATENT APPLICATIONS

This application claims the benefit of and priority to U.S. Provisional Application No. 63/620,565 filed January 12, 2024, and U.S. Provisional Application No. 63/616,213 filed December 29, 2023.

### TECHNICAL FIELD

The present disclosure relates generally to outdoor equipment. More specifically, the present disclosure relates to outdoor equipment for food preparation with a cutting board and a knife.

### BACKGROUND

Outdoor activities such as camping often require preparing food without traditional food preparation surfaces and equipment. The equipment required for food preparation can often be oddly shaped or require additional safety measures before it can be packed, such as cutting boards and knives. This can cause difficulty when packing or transporting the cutting boards and knives, where size and weight are prime concerns. It can be difficult to package the cutting boards and knives together as a single unit without knifes or cutting boards shifting and causing discomfort or noise, and if packed separately, the cutting boards and knives can be bulky and unnecessarily heavy. It would be beneficial to provide a cutting board assembly that includes both cutting boards and knives in a self-contained unit.

### SUMMARY OF DISCLOSURE

Disclosed herein is a cutting board assembly, comprising: a tray defining a knife slot; a knife positioned within the knife slot; and a cutting board removably coupled to the tray, such that when coupled to the tray the cutting board applies a force to the knife such that the knife is retained in a deflected state between the tray and the cutting board.

The knife may include a handle and a blade, and the cutting board may apply the force to the handle of the knife such that the blade bends in the deflected state. The cutting board may further comprise a handle support section and a gap between the knife slot and the handle support section to allow the handle to deflect.

The knife may include a handle with an aperture extending at least partially through the handle, and the tray may further include a post extending from a bottom of the tray at least partially into the aperture. The post may include a stepped extension, the stepped extension extending at least partially into the aperture.

The cutting board may comprise an outer cutting board removably coupled to the tray; and an inner cutting board removably positioned between the outer cutting board and the tray, and the outer cutting board may apply the force to the inner cutting board and the inner cutting board transfers the force to the knife.

The tray may further comprise a base tray removably coupled to the cutting board; and a knife tray removably positioned within the base tray, the knife tray defining the knife slot.

The cutting board assembly may further comprise a second knife slot and a second knife, such that when coupled to the tray the cutting board applies the force to the knife and the second knife such that the knife and the second knife are retained in the deflected state between the tray and the cutting board.

Also disclosed herein is a storage container, comprising: a tray; a flat spring removably positioned within the tray; and a lid removably coupled to the tray; wherein in a first configuration the lid is coupled to the tray and contacts the flat spring such that the flat spring is deformed to a loaded state wherein it applies a force against the lid.

In a second configuration the lid may be decoupled from the tray and the flat spring may be in an unloaded state. The flat spring may freely rest in the tray.

The flat spring may be a knife. The lid may be a cutting board. The tray may comprise a knife slot in a first plane of the tray and a handle support section in a second plane of the tray, the first plane being different than the second plane. The knife may comprise an aperture and the handle support section may comprise a post extending from a bottom of the tray at least partially into the aperture to support the knife. There may be a gap between the knife slot and the post.

Where the flat spring is a knife and the lid is a cutting board, the tray may comprise a base tray and a second tray removable positioned within the base tray; and the cutting board may comprise an outer cutting board coupled to the base tray and an inner cutting board secured between the outer cutting board and the base tray.

Also disclosed herein is a cutting board and knife kit, comprising: a base tray; a knife tray defining a knife slot; a knife positioned within the knife slot; an inner cutting board positioned on top of the knife tray; and an outer cutting board positioned on top of the inner cutting board and removably coupled to the base tray to couple the base tray, the knife tray, the inner cutting board, and the outer cutting board together in an assembled state, wherein in the assembled state the outer cutting board applies a force to the inner cutting board and the inner cutting board transfers the force to the knife such that the knife elastically deforms in the knife slot, such that the cutting board and knife kit is in tension in the assembled state.

The knife may include a handle with an aperture and the knife slot may include a post extending at least partially into the aperture.

The base tray may comprise a plurality of peripheral tabs extending from a rim of the base tray, and the inner cutting board and the outer cutting board may be configured to engage with the rim between the plurality of peripheral tabs.

### BRIEF DESCRIPTION OF THE FIGURES

The invention will become more fully understood from the following detailed description, taken in conjunction with the accompanying drawings, in which:
FIG. 1 is an exploded view of a cutting board assembly, according to an exemplary embodiment.
FIG. 2 is a perspective view of a base tray of the cutting board assembly of FIG. 1.
FIG. 3 is an enlarged perspective view of a portion of an underside of the base tray of FIG. 2.
FIG. 4 is a perspective view of a knife tray of the cutting board assembly of FIG. 1.
FIG. 5 is an enlarged perspective view of a portion of an underside of the knife tray of FIG. 4.
FIG. 6 is a front view of a knife of the cutting board assembly of FIG 1.
FIG. 7 is a front view of another knife of the cutting board assembly of FIG. 1.
FIG. 8 is a perspective view of base tray, the knife tray, and the knives of the cutting board assembly of FIG. 1 in a partially-assembled state.
FIG. 9 is a perspective view of an inner cutting board of the cutting board assembly of FIG. 1.
FIG. 10 is an enlarged perspective view of a corner of the inner cutting board of FIG. 9.
FIG. 11 is a perspective view of base tray, the knife tray, and the inner cutting board of the cutting board assembly of FIG. 1 in a partially-assembled state.
FIG. 12 is a perspective view of an outer cutting board of the cutting board assembly of FIG. 1.
FIG. 13 is a perspective view of the cutting board assembly of FIG. 1 in a fully assembled configuration.
FIG. 14 is a cross-section view of the fully assembled configuration of FIG. 13.
FIG. 15 is a perspective view of the cutting board assembly of FIG. 1 in a use configuration.
FIG. 16 is a perspective view of base tray, the knife tray, and the knives of the cutting board assembly, according to an exemplary embodiment.

### DETAILED DESCRIPTION

Before turning to the figures, which illustrate certain exemplary embodiments in detail, it should be understood that the present disclosure is not limited to the details or methodology set forth in the description or illustrated in the figures. It should also be understood that the terminology used herein is for the purpose of description only and should not be regarded as limiting.

A cutting board assembly includes a tray coupled to a cutting board and a knife secured within the tray. In an assembled or transport configuration, the knife is retained within the tray in tension in a deflected state such that the knife acts as a spring applying a counter force to the tray and cutting board. The tension of the knife prevents the knife from rattling inside the cutting board assembly. According to various exemplary embodiments, the cutting board assembly can include additional trays and cutting boards whose positions can be swapped to provide a plurality of different possible arrangements for use of the cutting board assembly.

The knife rests on the tray, such that it can be removed, used, and replaced by a user. In some embodiments, the tray includes knife slot and a handle support section to support the knife within the tray. The knife slot is spaced apart from the handle support section by a gap. The gap is deeper than a thickness of the knife, such that the knife is suspended between the knife slot and the handle support section. In some embodiments, one or more retention tabs in knife slot of the tray provide additional support for maintaining the position of the knife. In some embodiments, the handle support section is a post extending away from a bottom of the tray. In some embodiments, the knife includes a handle with an aperture in the handle to at least partially receive the post, such that the knife rests on the post and the knife slot.

In some embodiments, the cutting board exerts a force on the knife at a location between the knife slot and the handle support section causing the knife to bend or deflect and transition into a deflected state. The gap provides room for linear displacement of the knife in the deflected state. The potential energy stored in the knife due to its elastic strain in the deflected state causes the knife to act as a spring and exert a counter force on at least one of the tray or the cutting board. The counter force acts to keep the knife in a stable position relative to the tray and the cutting board. For example, when the cutting board is coupled to the tray causing the knife to transition to the deflected state, the counter force produced by the elasticity of the knife keeps the knife from rattling or shifting relative to the tray or cutting board when the entire cutting board assembly is moved.

According to various exemplary embodiments, the cutting board assembly includes a plurality of knives supported in the tray. In some embodiments, the tray is formed of two trays such that the inner or knife tray nests within the outer or base tray. The knife tray can include a lip configured to substantially surround the rim of the base tray to locate the knife tray relative to the base tray. The knife tray can be positioned between the cutting board and the base tray, such that when the cutting board is coupled to the base tray the knife tray is secured between the two. In some embodiments, the cutting board assembly includes an inner cutting board and an outer cutting board. The inner cutting board is positioned between the outer cutting board and the tray. For example, the inner cutting board can be positioned or rest on the knife tray, such that when the outer cutting board is coupled to the base tray the inner cutting board and the knife tray are secured between the two. In some embodiments, the base tray includes a rim and one or more tabs positioned around a rim of the base trim, and the outer cutting board can rest directly on the rim and between the one or more tabs.

According to various exemplary embodiments, the cutting board assembly is assembled by first positioning the knife tray in the base tray. One or more knives are positioned in the knife tray in one or more knife slots and on top of one or more posts. The inner cutting board is placed on top of the knife tray, and in some embodiments may rest in contact with a top of the one or more knifes. The outer cutting board is placed on top of the inner cutting board and coupled to the base tray by one or more mechanical couplers. As the outer cutting board is coupled to the base tray, it exerts a force on the inner cutting board. The inner cutting board transfers the force to the one or more knives, which deflect down away from the inner cutting board. The outer cutting board is then secured in position referred to as an assembled state, such that the one or more knives are in a temporary state of elastic deformation, also referred to herein as a deflected state or tension state. The one or more knives thereby act as a spring to exert a counter force ultimately against the mechanical couplers, such that the cutting board assembly itself is in a state of tension in the assembled state.

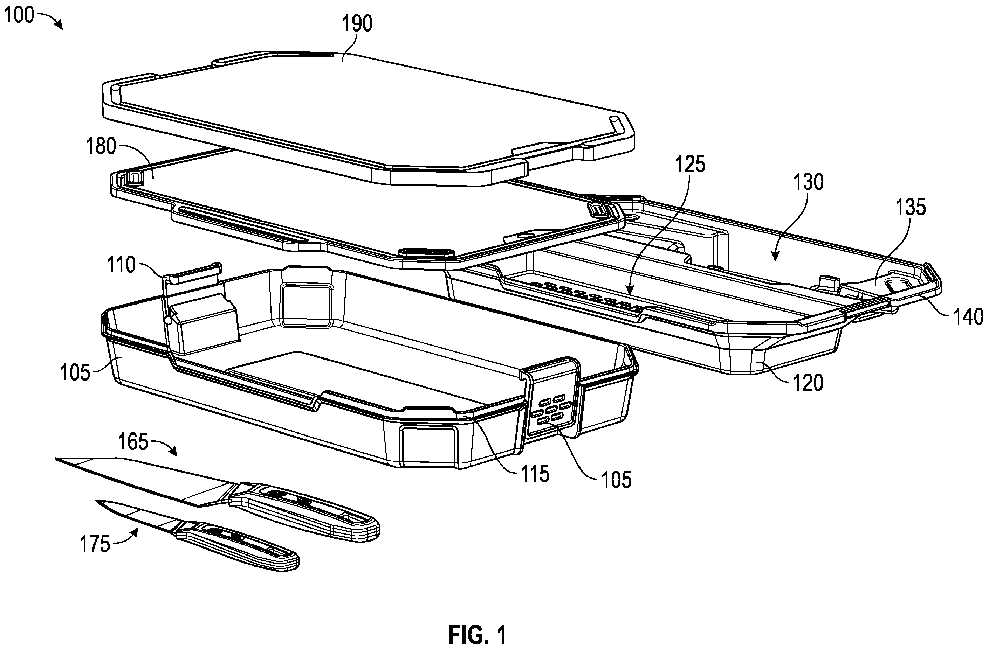

Referring now to FIG. 1, a cutting board assembly, referred to as cutting board assembly 100, is shown according to an exemplary embodiment. The cutting board assembly 100 includes a base tray 105. The base tray 105 includes two actuable clamps 110 positioned at opposite ends of the base tray 105. In some embodiments, the base tray alternatively or additionally includes other mechanical fastening or clamping means such as latches, clasps, or other user-operable coupling mechanisms. The base tray 105 is rectangular, however in some embodiments the base tray 105 can be circular or any other shape without departing from the scope of the invention.

The cutting board assembly 100 includes a second, internal tray, shown as knife tray 120 which can be removably positioned within the base tray 105. The knife tray 120 includes a storage section 125, a knife storage section 130, and at least one inner support section 135. In some embodiments, the storage section 125 is not included. In some embodiments, there are additional knife storage sections 130 that are separate from each other. The knife tray 120 includes a rim 140 which extends beyond and substantially surrounds a rim 115 of the base tray 105 when the knife tray 120 is positioned within the base tray 105.

The base tray 105 and the knife tray 120 are shown as separate, discrete components within the cutting board assembly 100. In some embodiments, one or both of the base tray 105 and the knife tray 120 are made of a plurality of subcomponents that are fixed, fastened, or otherwise coupled together. In some embodiments, the base tray 105 and the knife tray 120 are made as a single, integral component. The size and shape of the of knife tray 120 is dictated by the size and shape of the base tray 105, such that the knife tray 120 fits within the base tray 105 and the rim 140 of the knife tray 120 substantially or entirely covers the rim of 115 of the base tray 105.

The cutting board assembly 100 includes a plurality of knives, shown as first knife 165 and second knife 175. The first knife 165 and the second knife 175 can be positioned within the knife storage section 130 of the knife tray 120 when not in use. While shown to includes two knives, in some embodiments the cutting board assembly 100 includes fewer (e.g., one) or more knives. The first knife 165 and the second knife 175 can be of any type or style. For example, the first knife can be a Japanese-style knife such as a Santoku and the second knife 175 can be a pairing knife. In some embodiments, at least one of the first knife 165 or the second knife 175 can be serrated.

Referring still to FIG. 1, the cutting board assembly 100 includes a first, inner cutting board shown as inner cutting board 180. The inner cutting board 180 is supported by the at least one support section 135 of the knife tray 120. The inner cutting board is shown beneath a second, outer cutting board shown as outer cutting board 190. The outer cutting board 190 acts as a lid and top surface for the cutting board assembly 100. The outer cutting board 190 is removably coupled to the base tray 105 by the actuable clamps 110. In operation, the knife tray 120 is positioned within the base tray 105, such that the rim 140 of the knife tray rests on the rim 115 of the base tray 105. The first knife 165 and the second knife 175 are positioned within the knife storage section 130 of the knife tray 120. The inner cutting board 180 is positioned on top of the knife tray 120 covering the first knife 165 and the second knife 175, and rests on the at least one inner support section 135. The outer cutting board 190 rests on top of the inner cutting board 180 and is removably coupled to the base tray 105 by the actuable clamps 110, thereby securing the entire cutting board assembly 100 together.

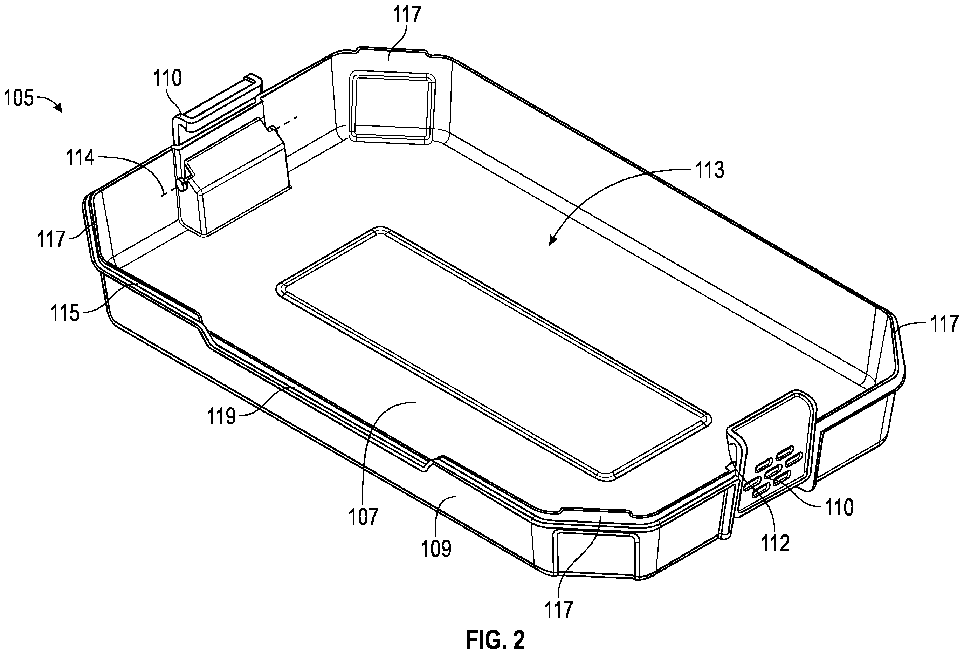

Referring now to FIG. 2, the base tray 105 is shown, according to an exemplary embodiments. The base tray 105 includes a base 107 and a perimeter wall 109 extending around a perimeter of the base 107 to define an inner cavity 113. The perimeter wall 109 is contiguous, though in other embodiments there may be multiple discrete sections of wall 109 extending from the base 107. In some embodiments, there may be one or more apertures in the wall 109 providing visual or physical access to the inner cavity 113. At the top of the wall 109 is the rim 115. The rim 115 includes a plurality of tabs 117 which extending vertically above the rim 115. The tabs 117 can be used to position or index the outer cutting board 190 when the outer cutting board 190 is placed directly on the base tray 105. The tabs 117 are shown positioned at each corner of the base tray 105, though the tabs can be placed at any position around the rim 115. In some embodiments, the tabs 117 are placed substantially opposite other tabs 117 to provide opposing surfaces for indexing or positioning the outer cutting board 190. While four tabs 117 are shown in FIG. 2, it should be understood that there may fewer or more tabs without departing from the scope of the invention. The perimeter wall 109 includes a lower or depressed section, shown as notch 119. In some embodiments, there are two notch 119 positioned opposite each other on the perimeter wall 109.

The base tray 105 includes two actuable clamps 110. Each of the actuable clamps 110 are slidable and rotatable around an individual axis 114, such that the clamps 110 can pivot open away from each other to receive the outer cutting board 190 and pivot closed and down to securely but removable couple the outer cutting board 190 to the base tray 105. The clamps 110 can be positioned on any side or sides of the base tray 105, and in some embodiments more or fewer clamps 110 may be included.

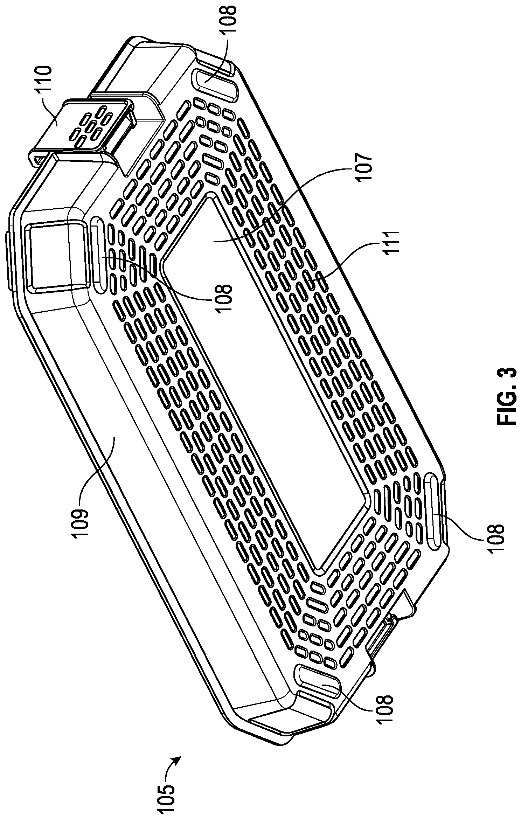

Referring now to FIG. 3, an underside of the base tray 105 is shown, according to an exemplary embodiment. The base tray 105 can include a plurality of feet 108 extending away from the base 107 in a direction substantially opposite to the wall 109. In some embodiments, the plurality of feet 108 are made of different material than the base tray 105. In some embodiments, the plurality of feet 108 are made of an elastomeric or rubber material to provide additional grip for the base tray 105. The bottom of the base tray 105 also includes a pattern, shown as pattern 111. In some embodiments, the pattern 111 provides additional protection against slipping for the base tray 105.

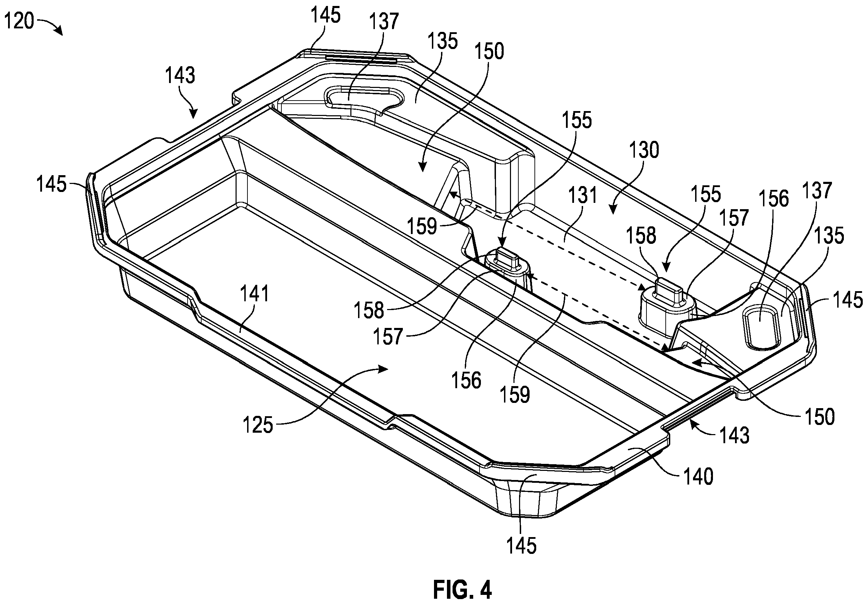

Referring now to FIG. 4, the knife tray 120 is shown, according to an exemplary embodiment. The knife tray 120 defines a plurality of cavities, shown as a storage section 125 and a knife storage section 130. While shown as two discrete sections, in some embodiments the storage section 125 and the knife storage section 130 are connected. In some embodiments, the storage section 125 can be subdivided in a one or more smaller subsections for improved organization.

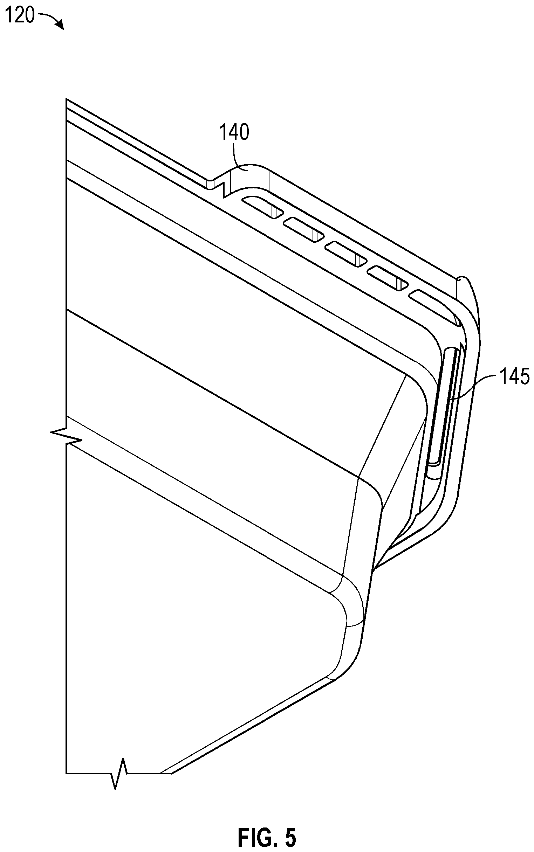

Surrounding a perimeter of the base tray 105 is a rim 140. The rim 140 is lipped to receive and at least partially surround the rim 115 of the base tray 105 as shown in FIG. 5. In some embodiments, the rim 115 includes a lower or depressed section, shown as notch 141. The notch 141 aligns with the notch 119 of the base tray 105. The rim 140 also includes a plurality of recesses 143 to receive the actuable clamps 110 of the base tray 105. The rim 140 further includes a plurality of tabs 145 extending away from and above the rim 140. The tabs 145 align with the and receive the tabs 117 of the base tray 105. In some embodiments, the tabs 145 are substantially hollow as shown in FIG. 5 to receive the tabs 117. In some embodiments, the tabs 145 act to index or position the inner cutting board 180 when the inner cutting board 180 is positioned on the knife tray 120.

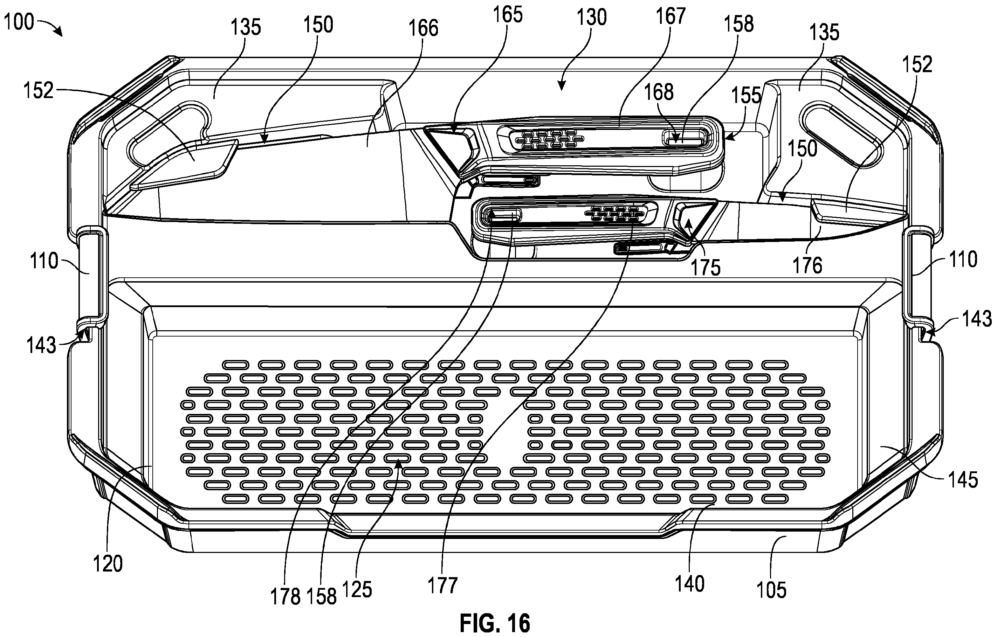

Referring again to FIG. 4, the knife tray 120 includes a knife storage section 130. The knife storage section can receive one or more knives, for example the first knife 165 and the second knife 175, for storage and transport within the cutting board assembly 100. The knife storage section 130 further includes two knife slots 150 and two posts 155. The knife slot 150 receives a blade of a knife, and is shaped to match the build and style of the knife. Still, in other embodiments the knife slots 150 are shaped to match a generic knife profile that a knife can fit within. In some embodiments, for example as shown in FIG. 16, the knife slots 150 include one or more retention tabs 152. The retention tabs 152 extend over a blade of a knife (e.g., first knife 165, second knife 175) to additionally secure the knife in the knife tray 120. Referring back to FIG. 4, while two knife slots 150 and knife posts 155 are shown, in some embodiments there may be fewer or more knife slots 150 and knife posts 155. The knife posts 155 extend up away from bottom 131 of the knife storage section 130. Each knife post 155 is stepped and includes a wider base 156 with a top 158, and with a ledge 157 surrounding the top 158 as it extends upwards from the base 156. The top 158 is sized to fit within an aperture or hole of a knife and allow a knife handle to rest on the ledge 157, as is explained below in greater detail with reference to FIGS. 5-7 and 13.

Each pair of knife slot 150 and knife post 155 is separated by a gap 159, due to the knife post 155 extending up from the bottom 131 of the knife storage section 130. The gap 159 between each pair of knife slot 150 and knife post 155 allows a knife to be suspended between the two supports (i.e., the knife slot 150 and the knife post 155).

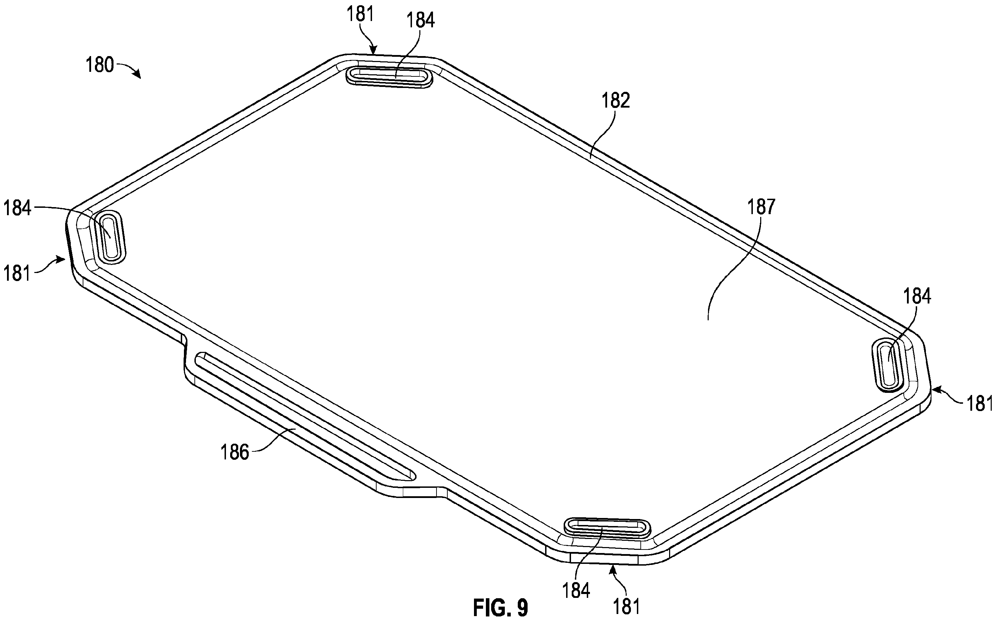

The knife tray 120 also includes one or more support sections 135. The support sections 135 extended laterally substantially parallel with the bottom 131 and provide support for the inner cutting board 180. The support sections 135 extend vertically above the knife slots 150 such that a blade of a knife in the knife slot 150 rests below a plane the support section 135 lies in. The support sections 135 include indents 137. The indents 137 are pill-shaped, though in other embodiments the indents may be circular, square, or any other shape. The indents 137 receive corresponding feet of the inner cutting board 180, as describe in greater detailed below with reference to FIG. 9.

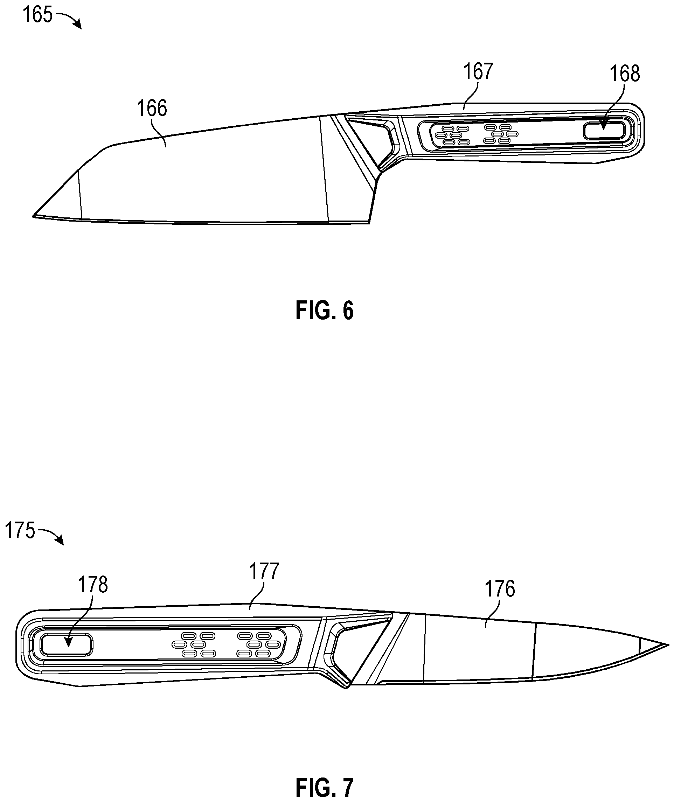

Referring now to FIG. 6, the first knife 165 is shown, according to an exemplary embodiment. The first knife 165 includes a blade 166 and a handle 167. The blade 166 may include a tang extending into the handle 167 and the handle 167 may be surround or at least partially surround the tang. The blade 166 is made of stainless steel. In other embodiments, the blade 166 can be made of other materials such as carbon steel, or tool steel, or other metals, or ceramic, or plastic. At least the blade 166 of the first knife 165 is at least partly elastically deformable, such that the first knife 165 can bend, at least slightly, without undergoing permanent deformation. The handle 167 is made of polypropylene, however in some embodiments the handle can be made of other moldable materials such as other thermoplastics, and resins, as well as other materials such as wood or metal. The first knife 165 is shown as a Santoku, however the first knife 165 can be other shapes or styles of knife without departing from the scope of the invention. The handle 167 includes a hole or cutout, shown as aperture 168. While only a single aperture 168 is shown, in some embodiments there may be additional apertures 168. The aperture 168 is pill-shaped, however in other embodiments the aperture 168 can be another shape such as circular, square, or any other shape.

Referring now to FIG. 7, the second knife 175 is shown, according to an exemplary embodiment. The second knife 175 includes a blade 176 and a handle 177. The blade 176 may include a tang extending into the handle 177 and the handle 177 may be surround or at least partially surround the tang. The blade 176 is made of stainless steel. In other embodiments, the blade 176 can be made of other materials such as carbon steel, or tool steel, or other metals, or ceramic, or plastic. At least the blade 176 of the second knife 175 is at least partly elastically deformable, such that the second knife 175 can bend, at least slightly, without undergoing permanent deformation. The handle 177 is made of polypropylene, however in some embodiments the handle can be made of other moldable materials such as other thermoplastics, and resins, as well as other materials such as wood or metal. The second knife 175 is shown as a pairing knife, however the second knife 175 can be other shapes or styles of knife without departing from the scope of the invention. The handle 177 includes a hole or cutout, shown as aperture 178. While only a single aperture 178 is shown, in some embodiments there may be additional apertures 178. The aperture 178 is pill-shaped, however in other embodiments the aperture 178 can be another shape such as circular, square, or any other shape.

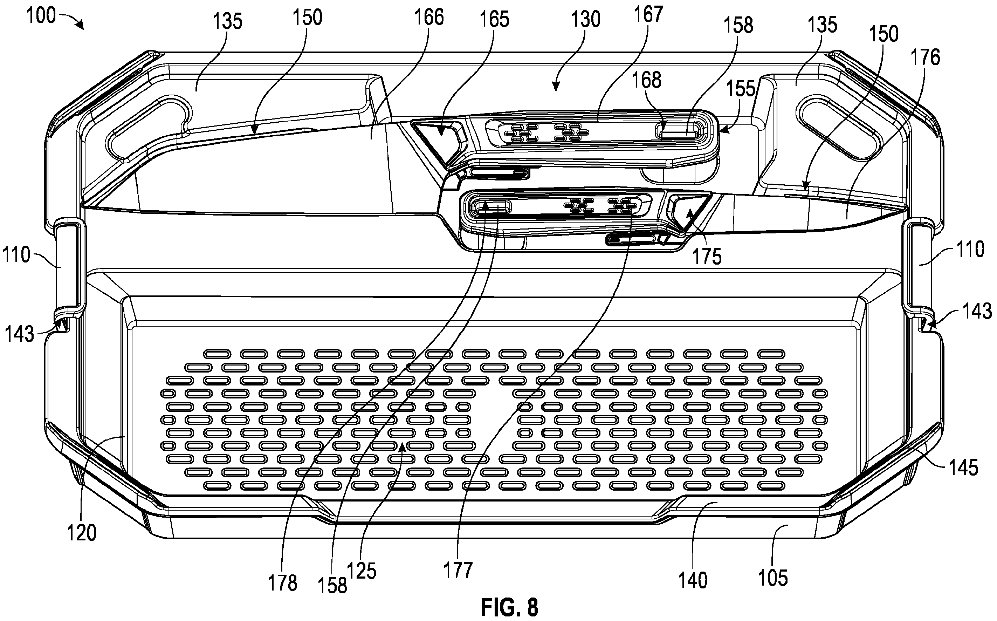

Referring now to FIG. 8, the cutting board assembly 100 is shown in a partially assembled state or configuration. The knife tray 120 is positioned within the base tray 105, such that the rim 140 of the knife tray extends over the rim 115 of the base tray. The clamps 110 pass through the recess 143 of the knife tray 120. As shown in FIG. 8, the first knife 165 and the second knife 175 are positioned within the knife storage section 130. Specifically, the first knife 165 has the blade 166 in a knife slot 150 and the handle 167 extending across a gap (e.g., gap 159) to rest on the post 155. The top 158 of the of the post 155 extends at least partially through the aperture 168 of the first knife 165 such that the handle 167 of the first knife 165 rests on the ledge 157 of the base 156. Similarly, the second knife 175 has the blade 176 in a knife slot 150 and the handle 177 extending across a gap (e.g., gap 159) to rest on the post 155. The top 158 of the of the post 155 extends at least partially through the aperture 178 of the second knife 175 such that the handle 177 of the second knife 175 rests on the ledge 157 of the base 156. Both the first knife 165 and the second knife 175 rest in the knife tray 120. The first knife 165 and the second knife 175 can be removed, used, and replaced by a user. In some embodiments, for example, as shown in FIG. 16, the first knife 165 and the second knife 175 are additionally retained in the knife slots 150 by the one or more retention tabs 152.

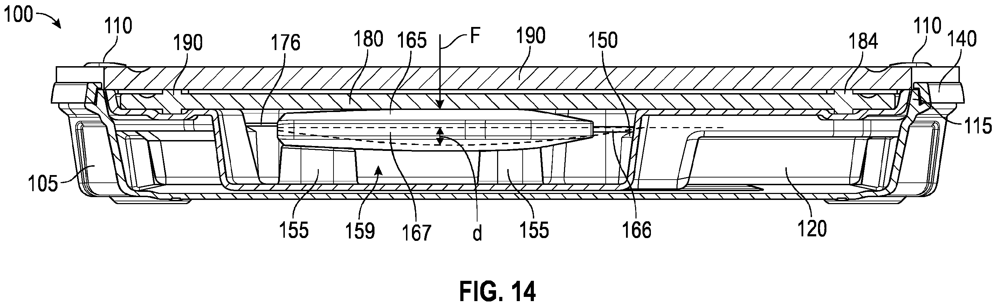

Referring back to FIG. 8, the knife slots 150 are sized to fit the blades 166, 176 of the first knife 165 and the second knife 175, respectively. The knife slots 150 and posts 155 position at least a portion of the handles 167, 177 of the first knife 165 and the second knife 175, respectively, to be proud of the one or more support sections 135, such that when the inner cutting board 180 is positioned on the knife tray 120 and resting on the one or more support sections 135, the inner cutting board 180 at least partially contacts or engages the handles 167, 177 of the first knife 165 and the second knife 175. In other embodiments, a top of the handles 167, 177 of the first knife 165 and the second knife 175 is below the plane of the one or more support structures, such that the inner cutting board 180 does not make contact with the handles 167, 177 of the first knife 165 and the second knife 175 when simply resting on the knife tray 120 without an additional, external force. This is explained in further detail below with reference to FIG. 14.

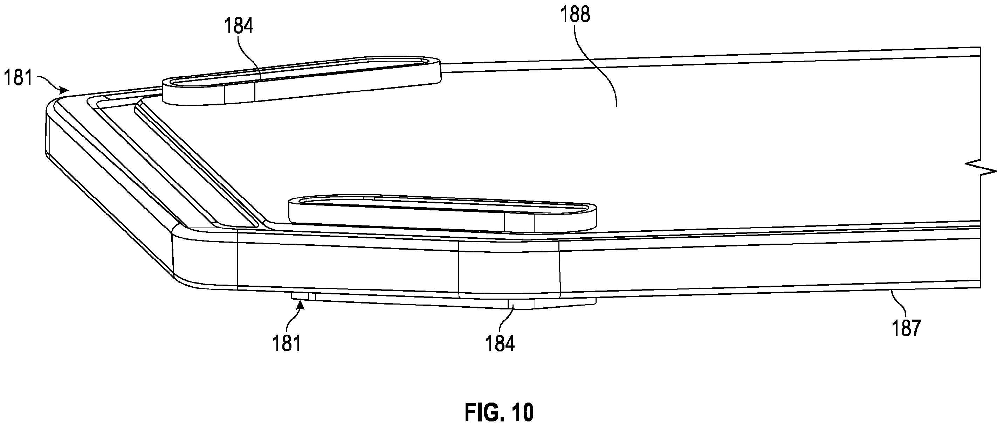

Referring now to FIGS. 9 and 10, the inner cutting board 180 is shown, according to an exemplary embodiment. The inner cutting board 180 is substantially flat or planar, and shaped substantially like a rectangle. While shown as a rectangle, the inner cutting board 180 can be any shape to match or nest within the base tray 105 and the knife tray 120. The corners 181 of the inner cutting board 180 slanted such that the inner cutting board 180 can nest on top of the one or more support sections 135 of the knife tray 120. The nesting of the inner cutting board 180 onto the one or more support sections 135 of the knife tray beneficials help to reduce side-to-side or lateral movement of the inner cutting board 180 relative to the knife tray 120 when resting on the knife tray 120. In some embodiments, the inner cutting board 180 includes one or more holes or apertures to allow visual or physical access to the knife tray 120 when the inner cutting board 180 is placed on the knife tray 120. The inner cutting board 180 includes a groove or depression, shown as groove 182, extending around a periphery of the inner cutting board 180. The groove 182 can beneficially catch liquids and scraps from food items used prepared on the inner cutting board 180.

The inner cutting board 180 includes a plurality of risers 184 positioned near each corner 181. The risers 184 extend away from both a top 187 and a bottom 188 of the inner cutting board 180 to raise the inner cutting board 180 up and away from the surface it is resting on. The inner cutting board 180 is reversible, such that it can be used with the top 187 facing away from the knife tray 120 or the bottom 188 facing away from the knife tray 120. The risers 184 are sized and positioned to align with the indents 137 of the knife tray 120, which beneficially helps to index and locate the inner cutting board 180 relative to the knife tray 120. The inner cutting board 180 includes an extension or protrusion, shown has handle 186, extending from one side of the inner cutting board 180. In some embodiments, a handle 186 is positioned at one or more other sides of the inner cutting board 180.

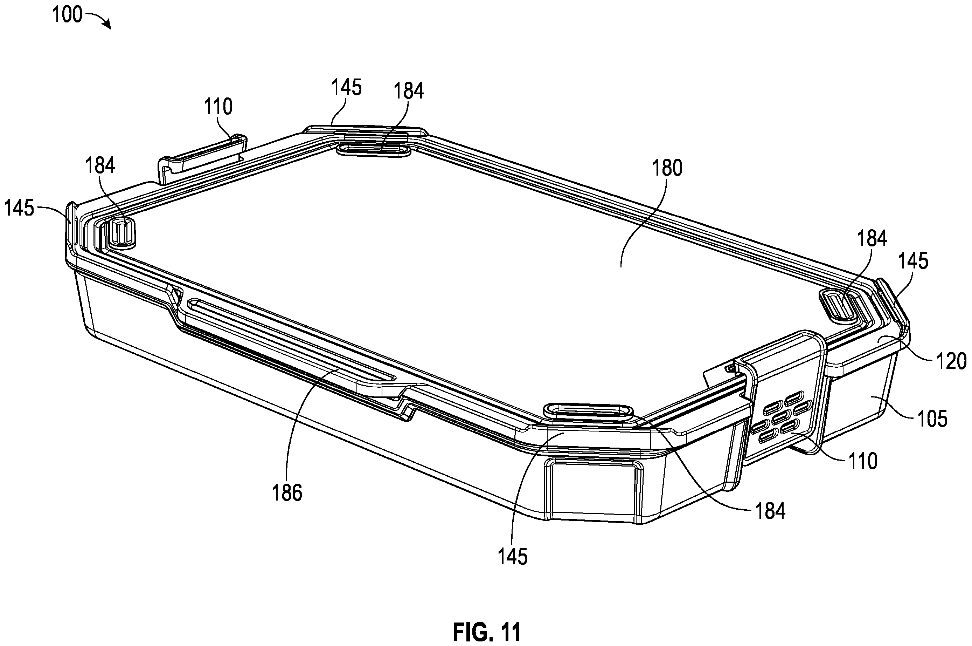

Referring now to FIG. 11, the cutting board assembly 100 including the base tray 105, the knife tray 120, and the inner cutting board 180 in a partially-assembled state. The knife tray 120 is positioned within the base tray 105, and the inner cutting board 180 is positioned on top of the knife tray 120. The handle 186 extends through the notch 119 of the base tray 105 and the notch 141 of the knife tray 120 to provide a user the ability to remove and otherwise manipulate the inner cutting board 180.

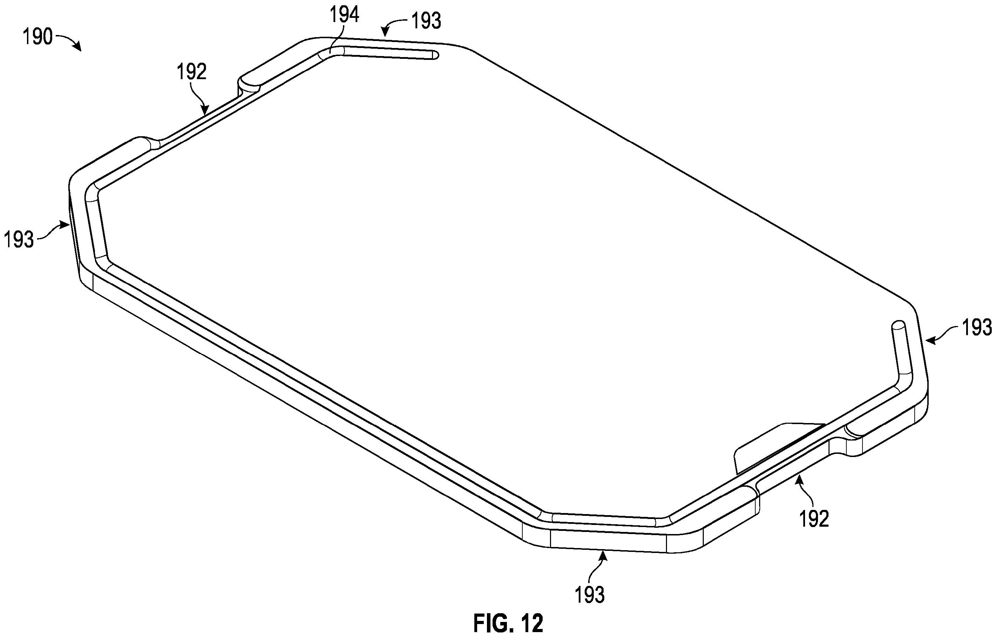

Referring now to FIG. 12, the outer cutting board 190 is shown, according to an exemplary embodiment. The outer cutting board 190 is substantially flat or planar, and shaped substantially like a rectangle. While shown as a rectangle, the outer cutting board 190 can be any shape to match or nest within the base tray 105, the knife tray 120, and the inner cutting board 180. The corners 193 of the outer cutting board 190 slanted such that the outer cutting board 190 can fit between the plurality of tabs 145 of the knife tray 120. The plurality of tabs 145 prevent the outer cutting board 190 from side-to-side or lateral movement relative to the rest of the cutting board assembly 100 when resting on top of the inner cutting board 180. In some embodiments, the outer cutting board 190 includes one or more holes or apertures to allow visual or physical access to the area directly below the outer cutting board 190, for example when the outer cutting board 190 is placed directly on the base tray 105. The outer cutting board 190 includes a groove or depression, shown as groove 194, extending around a periphery of the outer cutting board 190. The groove 194 can beneficially catch liquids and scraps from food items used prepared on the outer cutting board 190. The outer cutting board 190 includes a plurality of notches 192 on opposing ends of the outer cutting board 190 to receive the actuable clamps 110 of the base tray 105.

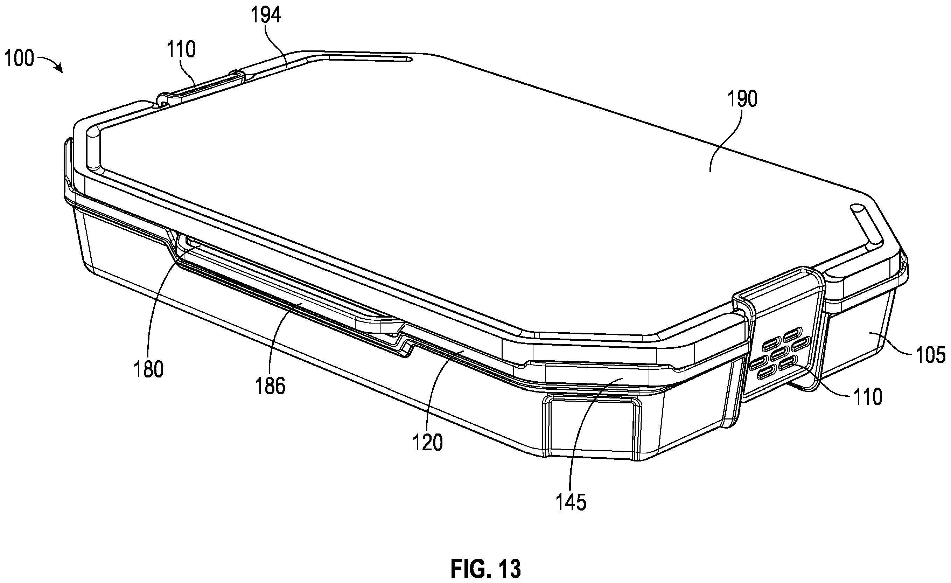

Referring now to FIG. 13, the cutting board assembly 100 is shown in a fully assembled configuration or state, according to an exemplary embodiment. As shown in FIG. 13, the knife tray 120 is positioned within the base tray 105, with the rim 140 of the knife tray 120 resting on the rim 115 of the base tray 105. The inner cutting board 180 is positioned on top of the knife tray 120, such that the handle 186 extends through the notch 119 and the notch 141. The outer cutting board 190 is place on top of the inner cutting board 180 and the clamps 110 of the base tray 105 removably couple the outer cutting board 190 to the base tray 105, which also secures the knife tray 120 and the inner cutting board 180 in the cutting board assembly 100. In some embodiments, the clamps 110 include a lip 112, as shown in FIG. 2, which engages with the groove 194 of the outer cutting board 190 to secure the outer cutting board 190 to the rest of the cutting board assembly 100. Though not visible in FIG. 13, the first knife 165 and the second knife 175 are positioned within the knife storage section 130 of the knife tray in the fully assembled configuration of the cutting board assembly 100.

Referring now to FIG. 14, a cross section of the fully assembled cutting board assembly 100 is shown, according to an exemplary embodiment. The first knife 165 is positioned in the knife storage section 130 with the blade 166 resting on the knife slot 150 and the handle 167 resting on the post 155. The outer cutting board 190 is removably coupled to the base tray 105, thereby clamping the base tray 105, the knife tray 120, the inner cutting board 180, and the outer cutting board 190 together. Due to the clamping of the outer cutting board 190 and the base tray 105 the outer cutting board applies a force F to the inner cutting board 180, which pushes the inner cutting board 180 against a top of the handle 167. This force F therefore causes the knife to deflect a distance d down into the gap 159 between the knife slot 150 and the post 155. The deflection represented by distance d in FIG. 14 is exaggerated for the purposes of illustration. The knife blade 166 thus elastically deforms, and stores as elastic strain in the first knife 165 a counter force to force F. When deflected, the first knife 165 is referred to as being in a state of tension or a deflected state. The first knife 165 remains in the deflected state so long as the force F is applied (e.g., so long as the cutting board assembly 100 is fully assembled). In this deflected state, the first knife 165 acts as a spring (e.g., a flat spring) which pushes against both the knife tray 120 and the inner cutting board 180, which secures the first knife 165 in place. Beneficially, the first knife 165 acting as a spring reduces rattling and movement of the first knife 165 relative to the rest of the cutting board assembly 100 when the cutting board assembly 100 is moved. In some embodiments, the second knife 175 behaves in the same way as the first knife 165. The force F can be adjusted by changing the size of the handles 167, 177 of the first knife 165 or second knife 175, the heights of the posts 155 or the knife slot 150, or the thicknesses of the inner cutting board 180 or the outer cutting board 190. In some embodiments, When the outer cutting board 190 is decoupled from the rest of the cutting board assembly 100, the force F is removed (or substantially removed). The inner cutting board 180 can also be lifted away and the first knife 165 and the second knife 175 can be removed.

One or more components of the cutting board assembly 100 (e.g., base tray 105, knife tray 120, handle 167, handle 177, inner cutting board 180, risers 184, outer cutting board 190, clamps 110, and other components) can be made of a thermoplastic polymer such as polypropylene. In some embodiments, they can be made of other plastics, resins, or polymers or metal or wood. In some embodiments, the outer cutting board 190 is made of wood, such as bamboo. In some embodiments, the risers 184 are made of some kind of rubber or silicone material to enhance the grip of the inner cutting board 180.

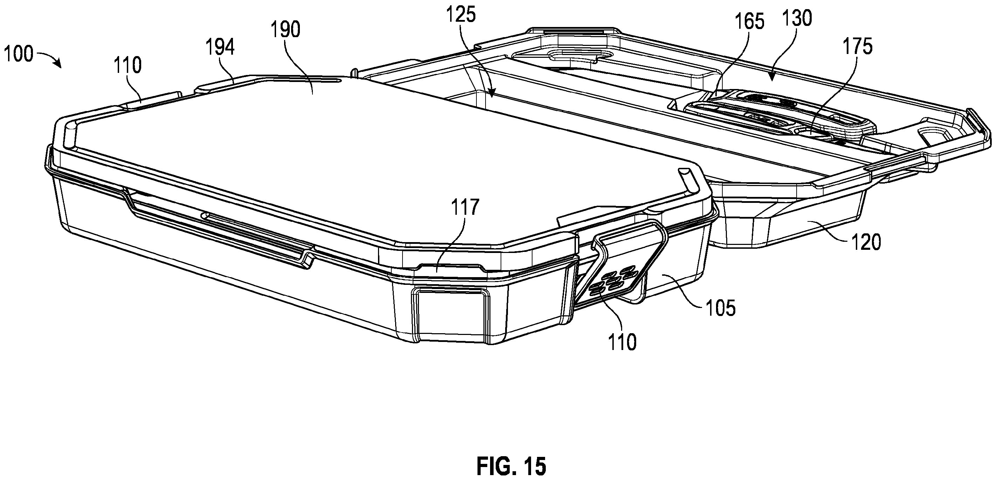

Referring now to FIG. 15, the cutting board assembly 100 is shown in a use configuration, according to an exemplary embodiment. In the use configuration, the knife tray 120 can be removed from the base tray 105 and placed adjacent to the base tray 105. The first knife 165 and the second knife 175 can still be stored in the knife storage section 130 when not being used by the user for cutting. The outer cutting board 190 can rest directly on the base tray 105 between the tabs 117. The tabs 117 reduce the side-to-side or lateral movement of the outer cutting board 190 relative to the base tray 105. Beneficially, by resting the outer cutting board 190 on the base tray 105 the outer cutting board 190 can take advantage of the group provided by the feet 108 and pattern 111. The outer cutting board 190 is positioned higher than the knife tray 120. In some embodiments, the groove 194 only extends partially around the perimeter of the outer cutting board 190 so that food scraps can be pushed directly into the storage section 125 of the knife tray 120.

Referring now to FIG. 16, the cutting board assembly 100 is shown in a partially assembled state or configuration, according to another exemplary embodiment. The first knife 165 and the second knife 175 are positioned within the knife storage section 130. Specifically, the first knife 165 has the blade 166 in a knife slot 150 and the handle 167 extending across a gap (e.g., gap 159) to rest on the post 155. The blade 166 extends beneath a retention tab 152 in the knife slot 150 to additionally secure the first knife 165 in the knife slot 150. The top 158 of the of the post 155 extends at least partially through the aperture 168 of the first knife 165 such that the handle 167 of the first knife 165 rests on the ledge 157 of the base 156. Similarly, the second knife 175 has the blade 176 in a knife slot 150. The blade 176 extends beneath a retention tab 152 in the knife slot 150 to additionally secure the second knife 175 in the knife slot 150. The second knife 175 further includes the handle 177 extending across a gap (e.g., gap 159) to rest on the post 155. The top 158 of the of the post 155 extends at least partially through the aperture 178 of the second knife 175 such that the handle 177 of the second knife 175 rests on the ledge 157 of the base 156. The first knife 165 and the second knife 175 can be removed, used, and replaced by a user who slides the blades 166, 176 out from under each retention tab 152.

As utilized herein, the terms "approximately," "about," "substantially", and similar terms are intended to have a broad meaning in harmony with the common and accepted usage by those of ordinary skill in the art to which the subject matter of this disclosure pertains, and mean +/-10% from the given value or direction. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the disclosure as recited in the appended claims.

It should be noted that the term "exemplary" and variations thereof, as used herein to describe various embodiments, are intended to indicate that such embodiments are possible examples, representations, or illustrations of possible embodiments (and such terms are not intended to connote that such embodiments are necessarily extraordinary or superlative examples).

The term "coupled" and variations thereof, as used herein, means the joining of two members directly or indirectly to one another. Such joining may be stationary (e.g., permanent or fixed) or moveable (e.g., removable or releasable). Such joining may be achieved with the two members coupled directly to each other, with the two members coupled to each other using a separate intervening member and any additional intermediate members coupled with one another, or with the two members coupled to each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic.

The term "or," as used herein, is used in its inclusive sense (and not in its exclusive sense) so that when used to connect a list of elements, the term "or" means one, some, or all of the elements in the list. Language such as the phrases "at least one of X, Y, and Z" and "at least one of X, Y, or Z," unless specifically stated otherwise, are understood to convey that an element may be either X; Y; Z; X and Y; X and Z; Y and Z; or X, Y, and Z (i.e., any combination of X, Y, and Z). Thus, such language is not generally intended to imply that certain embodiments require at least one of X, at least one of Y, and at least one of Z to each be present, unless otherwise indicated.

References herein to the positions of elements (e.g., "top," "bottom," "above," "below") are merely used to describe the orientation of various elements in the FIGURES. It should be noted that the orientation of various elements may differ according to other exemplary embodiments, and that such variations are intended to be encompassed by the present disclosure.

It is important to note that the construction and arrangement of the cutting board assembly 100 as shown in the various exemplary embodiments are illustrative only. Although only a few embodiments have been described in detail in this disclosure, many modifications are possible (e.g., variations in sizes, dimensions, structures, shapes and proportions of the various elements, values of parameters, mounting arrangements, use of materials, colors, orientations, etc.). For example, some elements shown as integrally formed may be constructed from multiple parts or elements, the position of elements may be reversed or otherwise varied and the nature or number of discrete elements or positions may be altered or varied. Accordingly, all such modifications are intended to be included within the scope of the present disclosure. The order or sequence of any process or method steps may be varied or re-sequenced according to alternative embodiments. Other substitutions, modifications, changes, and omissions may be made in the design, operating conditions and arrangement of the exemplary embodiments without departing from the scope of the present disclosure.

## Claims

1. A cutting board assembly, comprising:
a tray defining a knife slot;
a knife positioned within the knife slot; and
a cutting board removably coupled to the tray, such that when coupled to the tray the cutting board applies a force to the knife such that the knife is retained in a deflected state between the tray and the cutting board.

2. The cutting board assembly of claim 1, wherein the knife includes a handle and a blade, and wherein the cutting board applies the force to the handle of the knife such that the blade bends in the deflected state, preferably wherein the cutting board assembly further comprises a handle support section and a gap between the knife slot and the handle support section to allow the handle to deflect.

3. The cutting board assembly of claim 1, wherein the knife includes a handle with an aperture extending at least partially through the handle, and wherein the tray further includes a post extending from a bottom of the tray at least partially into the aperture, preferably wherein the post includes a stepped extension, the stepped extension extending at least partially into the aperture.

4. The cutting board assembly of any of claims 1 to 3, wherein the cutting board comprises:
an outer cutting board removably coupled to the tray; and
an inner cutting board removably positioned between the outer cutting board and the tray, wherein the outer cutting board applies the force to the inner cutting board and the inner cutting board transfers the force to the knife.

5. The cutting board assembly of any of claims 1 to 4, the tray further comprising:
a base tray removably coupled to the cutting board; and
a knife tray removably positioned within the base tray, the knife tray defining the knife slot.

6. The cutting board assembly of any of claims 1 to 5, further comprising a second knife slot and a second knife, such that when coupled to the tray the cutting board applies the force to the knife and the second knife such that the knife and the second knife are retained in the deflected state between the tray and the cutting board.

7. A storage container, comprising:
a tray;
a flat spring removably positioned within the tray;
a lid removably coupled to the tray;
wherein in a first configuration the lid is coupled to the tray and contacts the flat spring such that the flat spring is deformed to a loaded state wherein it applies a force against the lid.

8. The storage container of claim 7, wherein in a second configuration the lid is decoupled from the tray and the flat spring is in an unloaded state.

9. The storage container of claim 7 or 8, wherein the flat spring is a knife, and preferably wherein the lid is a cutting board.

10. The storage container of claim 9, wherein the tray comprises a knife slot in a first plane of the tray and a handle support section in a second plane of the tray, the first plane being different than the second plane, preferably wherein the knife comprises an aperture and the handle support section comprises a post extending from a bottom of the tray at least partially into the aperture to support the knife, more preferably further comprising a gap between the knife slot and the post.

11. The storage container of claim 9 or 10, wherein the tray comprises a base tray and a second tray removable positioned within the base tray; and the cutting board comprises an outer cutting board coupled to the base tray and an inner cutting board secured between the outer cutting board and the base tray.

12. The storage container of any of claims 7 to 11, wherein the flat spring freely rests in the tray.

13. A cutting board and knife kit, comprising:
a base tray;
a knife tray defining a knife slot;
a knife positioned within the knife slot;
an inner cutting board positioned on top of the knife tray; and
an outer cutting board positioned on top of the inner cutting board and removably coupled to the base tray to couple the base tray, the knife tray, the inner cutting board, and the outer cutting board together in an assembled state, wherein in the assembled state the outer cutting board applies a force to the inner cutting board and the inner cutting board transfers the force to the knife such that the knife elastically deforms in the knife slot, such that the cutting board and knife kit is in tension in the assembled state.

14. The cutting board and knife kit of claim 13, wherein the knife includes a handle with an aperture and the knife slot includes a post extending at least partially into the aperture.

15. The cutting board and knife kit of claim 13 or 14, wherein the base tray comprises a plurality of peripheral tabs extending from a rim of the base tray, and wherein the inner cutting board and the outer cutting board are configured to engage with the rim between the plurality of peripheral tabs.
